# FASCICULE DE BREVET EUROPEEN

(11) **EP 1 406 829 B1**
(45) Date de publication et mention de la délivrance du brevet: **05.04.2006**
(21) Numéro de dépôt: 02732300.5
(22) Date de dépôt: 06.06.2002
(51) Int. Cl.: B65H 51/14, B29C 47/34, H02G 1/08

(54) **DISPOSITIF D'ENTRAINEMENT A CHENILLE**
RAUPENANTRIEBSVORRICHTUNG
TRACKED DRIVE DEVICE

(30) Priorité: 18.07.2001 CH 13272001
(43) Date de publication de la demande: 14.04.2004
(73) Titulaire: PLUMETTAZ SA, 1880 Bex (CH)
(72) Inventeur: BRESSOUD, Patrick, CH-1871 Choex (CH)
(74) Mandataire: Reuteler, Raymond Werner
(86) Numéro de dépôt international: PCT/CH2002/000299
(87) Numéro de publication internationale: WO 2003/008314

(56) Documents cités:
- DE-A- 2 103 698
- DE-U- 29 905 210
- FR-A- 2 236 644
- US-A- 2 679 924
- US-A- 4 285 454
- US-A- 5 967 495
- US-B1- 6 189 758
- PATENT ABSTRACTS OF JAPAN vol. 2000, no. 06, 22 septembre 2000 (2000-09-22) -& JP 2000 086081 A (SHOWA ELECTRIC WIRE &CABLE CO LTD; NIPPON TELEGR & TELEPH CORP), 28 mars 2000 (2000-03-28)

## Description

La présente invention concerne les dispositifs d'entraînement d'éléments longilignes, tout particulièrement ceux munis de chenilles d'entraînement sous forme de chaînes ou de courroies sans fin, aptes à entraîner selon un mouvement de translation lesdits éléments longilignes, l'invention concernant plus particulièrement les moyens permettant de faciliter l'accès audites chaînes ou courroies sans fin afin d'en faciliter l'échange.

Un cas particulier d'un dispositif d'entraînement tel que décrit de manière générale ci-dessus est un dispositif d'entraînement à chenilles prévu pour l'entraînement selon un mouvement de translation longitudinal de câbles, tubes ou autres éléments de section essentiellement cylindrique.

Le brevet US-5.884.384 décrit un procédé de pose par soufflage de un ou plusieurs câbles ou tubes vides dans un tube posé en terre. Le dispositif utilisé à cet effet comprend deux chaînes sans fin, chacune portant une pluralité de pièces d'entraînement disposées successivement sur la chaîne, comme représenté par exemple dans US-2.679.924, chacune desdites pièces d'entraînement étant munie d'une semelle d'entraînement ayant une forme adaptée à l'élément ou aux éléments à entraîner. Un brin rectiligne de chacune des chaînes circule en parallèle, en face du brin correspondant de l'autre chaîne, l'élément ou les éléments à entraîner étant serrés entre les semelles d'entraînement des pièces d'entraînement se faisant face.

Vu que les semelles d'entraînement montées sur les chaînes ont une forme et des dimensions adaptées à l'élément ou aux éléments à entraîner, il est nécessaire de changer lesdites semelles, respectivement de changer de chaîne lors de chaque changement de forme ou de dimension de l'élément à poser.

Par ailleurs, les normes de sécurité exigent que chacune des deux chaînes ainsi que les pièces et semelles d'entraînement soient logées dans des bâtis, carters ou capots, agencés de telle sorte qu'il soit impossible d'y glisser accidentellement un doigt ou toute autre partie du corps humain afin d'éviter toute blessure.

Cette dernière exigence rend donc difficile l'accès aux chaînes afin de pouvoir les démonter pour les échanger contre des chaînes munies de pièces d'entraînement, respectivement de semelles ayant une forme et des dimensions adaptées au prochain produit à poser.

Le but de la présente invention est donc de proposer un dispositif d'entraînement d'éléments longilignes agencé de telle manière que le démontage et le montage du moyen d'entraînement en sont facilités.

Ce but est obtenu par un dispositif d'entraînement tel que décrit dans la revendication 1, des formes d'exécution particulières étant décrites dans les revendications dépendantes.

Une forme d'exécution particulière d'un dispositif selon l'invention est décrite ci-dessous, description qui est à considérer en regard du dessin annexé comportant les figures où :
la figure 1 représente une vue latérale d'un dispositif complet d'entraînement d'un élément longiligne en position de travail,
la figure 2 représente une vue en perspective de la portion supérieure ouverte d'une partie du dispositif précédent,
la figure 3 représente la portion inférieure ouverte de la même partie de dispositif.

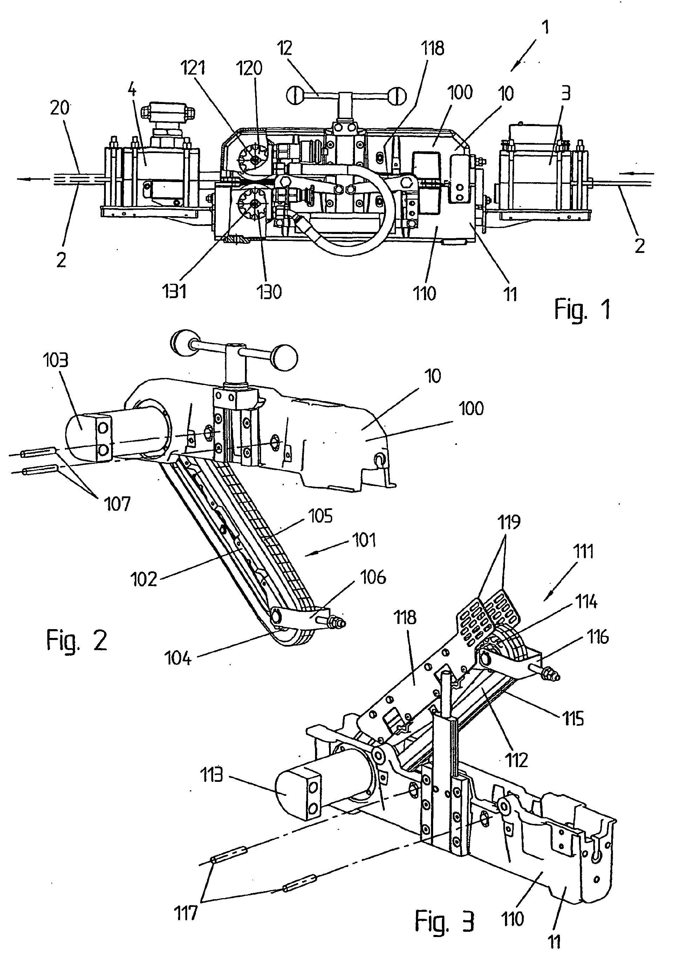

Le dispositif d'entraînement 1 d'un élément longiligne 2, ici un câble, est généralement associé, comme on le voit sur la figure 1, à un premier dispositif de mesure de vitesse et de longueur de pose 3 ainsi qu'à un dispositif d'injection d'un fluide 4 chargé d'introduire un flux dudit fluide à l'intérieur d'un tube 20 aidant à la pose du câble 2 à l'intérieur du tube 20. Ce procédé de pose étant connu, il ne sera pas décrit plus précisément ici.

La figure 1 montre que le dispositif d'entraînement 1 est composé d'une portion supérieure 10 et d'une portion inférieure 11, les deux dites portions étant maintenues ensemble par un moyen de fixation et de réglage d'écartement 12 permettant de fixer ensemble les deux portions 10 et 11 et de régler l'écartement des mécanismes d'entraînement selon une technique connue. En conséquence, les mêmes moyens 12 permettent de désolidariser les deux portions 10 et 11 afin d'obtenir deux portions séparées comme on le voit aux figures suivantes.

En fonctionnement, comme on le voit à la figure 1, les deux bâtis, carters ou capots 100 et 110 des portions supérieure 10 et inférieure 11 ont leurs bordures se faisant face directement en contact ou très proches l'une de l'autre, ne laissant généralement aucun espace ou un espace minimum entre lesdites portions. Pour le cas où sur une longueur de l'interface entre les deux portions on aurait un espace trop important qui subsisterait, on voit sur la figure 3, que le mécanisme d'entraînement est protégé en plus par deux tôle latérales 118 assurant ainsi une sécurité complète du dispositif contre toute intrusion accidentelle d'un doigt ou de toute autre partie du corps humain.

Vu que les mécanismes d'entraînement sont ainsi profondément enfoncés dans les bâtis, l'accès aux chaînes d'entraînement pour leur démontage et leur échange est difficile.

Les mécanismes d'entraînement 101, respectivement 111, de chacune des deux portions 10 et 11 comprennent chacun, comme on le voit aux figures 2 et 3, un châssis 102, respectivement 112 portant sur ses extrémités deux roues dentées, une première 120, respectivement 130, visibles en coupes partielles sur la figure1, chacune montée sur un axe 121, respectivement 131 directement entraîné par un moteur 103, respectivement 113, la deuxième roue dentée 104, respectivement 114, faisant office de roue de renvoi de la chaîne sans fin 105, respectivement 115, sur laquelle sont montées les pièces d'entraînement munies de semelles d'entraînement comme décrites précédemment. Le mécanisme est complété d'un dispositif de mise sous tension mécanique de la chaîne sans fin, constitué, selon cette forme d'exécution, d'un étrier 106, respectivement 116, fixé d'une part à l'axe des roues dentées de renvoi 104, respectivement 114, et muni d'une tige filetée apte à être introduite dans une ouverture correspondante du bâti 100, respectivement 110, la mise en tension étant assurée par le serrage d'un boulon sur ladite tige filetée. Dans cette forme d'exécution du dispositif de serrage, au moins un des logements des axes portant les roues dentées est oblong afin de permettre ladite mise sous tension de la chaîne d'entraînement.

Selon une autre forme d'exécution du dispositif de mise sous tension mécanique de la chaîne sans fin, celui-ci, non représenté sur les figures, est directement monté sur les châssis 102 et 112 et est apte, par un moyen connu à vis de réglage et/ou à genouillère, de légèrement rapprocher ou écarter les axes des roues dentées, mettant ainsi la chaîne sous tension.

Des goupilles 107, respectivement 117, passant par des trous aménagés d'une part dans les bâtis 100 et 110 servent à maintenir en place les châssis 102, respectivement 112, chacun dans son bâti respectif.

Comme mentionné précédemment, l'une des portions du dispositif d'entraînement, ici la portion inférieure, comprend avantageusement, sur son mécanisme d'entraînement 111, deux plaques de protection 118, disposées de chaque côté dudit mécanisme et bouchant les éventuelles ouvertures entre les deux bâtis, comme on le voit à la figure 1. Chacune desdites plaques de protection comprend de préférence une extension 119 sur son extrémité la plus proche de l'extrémité d'introduction de l'élément longiligne 2, de manière à empêcher l'introduction d'un doigt ou de toute autre portion du corps humain par cette ouverture d'introduction.

Pour le changement des chaîne d'entraînement, il suffit maintenant de séparer les dispositifs de mesure 3 et de soufflage 4 du dispositif d'entraînement 1, puis de séparer la portion supérieure 10 de la portion inférieure 11 dudit dispositif, ensuite de quoi, pour chacune des portions, en détendant la chaîne et en retirant les goupilles 107 et 117, on peut faire pivoter chacun des mécanismes d'entraînement autour de son axe moteur, comme représentés sur les figures 2 et 3 rendant ainsi les chaînes 105 et 115 directement accessibles pour être démontées de manière conventionnelle. Le montage des nouvelles chaîne se fait exactement dans l'ordre inverse de ce qui vient d'être décrit.

Les moyens d'accès facilités au mécanisme d'entraînement ont été décrits ci-dessus pour un mécanisme d'entraînement à chaîne sans fin munies de pièces d'entraînement comprenant chacune une semelle d'entraînement. Il est bien entendu que des moyens d'accès facilités semblables peuvent aussi être prévus lorsque le mécanisme d'entraînement comprend une courroie, plate ou de forme, qu'il peut aussi être nécessaire de changer. De même, ces moyens d'accès facilités ont été décrits comme faisant pivoter les mécanismes d'entraînement autour des axes moteurs ; bien que cette disposition soit avantageuse, il serait tout aussi possible de faire pivoter les mécanismes autour des axes de renvoi. Par ailleurs il est évident que le dispositif de fixation et de serrage 12 tel que décrit précédemment n'est pas essentiel à l'invention et qu'il peut être conçu différemment de ce qui a été décrit ici. Et enfin, de tels moyens d'accès facilités à un mécanisme d'entraînement à chenille peuvent être utilisés pour d'autres dispositifs d'entraînement d'éléments longilignes que celui décrit plus haut uniquement à titre d'exemple.

## Revendications

1. Dispositif d'entraînement (1) d'un élément longiligne (2) comprenant une portion supérieure (10) comprenant un premier mécanisme d'entraînement (101) d'une première chenilles sans fin (105) et une portion inférieure (11) comprenant un deuxième mécanisme d'entraînement (111) d'une deuxième chenille sans fin (115), deux portions rectilignes se faisant face desdites chenilles étant pressées contre deux faces opposées dudit élément longiligne entraînant ce dernier en translation, chacune desdites portions supérieure (10) et inférieure (11) étant recouverte d'un bâti ou d'un capot (100,110) entourant le mécanisme d'entraînement correspondant de manière à ce qu'en position de travail dudit dispositif d'entraînement il ne subsiste aucune ouverture suffisante entre lesdits bâtis ou capots par laquelle un doigt pourrait être introduit accidentellement entre lesdites portions supérieure et inférieure
**caractérisé en ce que**
chacun desdits mécanismes d'entraînement (101,111) est monté dans la portion correspondante (10,11) de manière pivotante autour d'un axe, de manière à pouvoir facilement être au moins partiellement extrait du bâti ou capot (100, 110) correspondant, afin de faciliter l'accès à la chenille (105,115) qu'il contient, pour son démontage, respectivement son montage.

2. Dispositif d'entraînement selon la revendication 1, **caractérisé en ce que** chaque mécanisme d'entraînement (101,111) comprend un châssis longitudinal (102,112) muni à une première de ses extrémités d'un axe d'entraînement (121,131) portant une roue d'entraînement (120,130) et à l'autre de ses extrémités d'un axe de renvoi portant une roue de renvoi (104,114), la chenille passant par dessus la roue d'entraînement et la roue de renvoi, ainsi que des moyens de fixation (106,116,107,117) dudit support longitudinal dans la portion correspondante.

3. Dispositif d'entraînement selon la revendication 2, **caractérisé en ce que** le moyen de fixation du support longitudinal (102,112) dans la portion correspondante est constitué de l'axe d'entraînement ou de l'axe de renvoi, dont les extrémités sont fixées dans des logements du bâti ou du capot correspondant (100,110), permettant un pivotement du mécanisme d'entraînement (101,111) autour dudit axe, ainsi que d'un dispositif de blocage (107,117) du mécanisme d'entraînement dans son capot.

4. Dispositif d'entraînement selon la revendication 3, **caractérisé en ce que** le dispositif de blocage comprend au moins une goupille (107,117) apte à bloquer le mécanisme d'entraînement en position rabattue dans le bâti ou le capot correspondant.

5. Dispositif d'entraînement selon la revendication 4, **caractérisé en ce que** le dispositif de blocage comprend en outre un dispositif de mise sous tension mécanique (106) de la chenille.

6. Dispositif selon l'une des revendications précédentes, **caractérisé en ce qu'**au moins un des mécanismes d'entraînement (101,111) comprend une plaque de tôle (118) de protection sur chacune de ses faces latérales longitudinales.

7. Dispositif selon la revendication 6, **caractérisé en ce que** les tôles de protection (118) comprennent, sur leur extrémité proche de l'orifice d'introduction dudit élément longiligne, une extension (119) apte à empêcher une introduction accidentelle d'un doigt.

8. Dispositif selon l'une des revendications précédentes, **caractérisé en ce que** chaque chenille comprend une chaîne sans fin (105,115) munie de pièces d'entraînement disposées successivement sur ladite chaîne et portant chacune une semelle d'entraînement.

9. Dispositif selon l'une des revendications 1 à 7, **caractérisé en ce que** chaque chenille comprend une courroie sans fin.

## Claims

1. A device (1) for driving a slender element (2) comprising a top portion (10) comprising a first drive mechanism (101) for a first endless track (105) and a bottom portion (11) comprising a second drive mechanism (111) for a second endless track (115), two rectilinear portions facing the said tracks being pressed against two opposite faces of the said slender element driving the latter in translation, each of the said top (10) and bottom (11) portions being covered with a frame or hood (100, 110) surrounding the corresponding drive mechanism so that, in the working position of the said drive device, there remains no sufficient opening between the said frames or hoods through which a finger could be inserted accidentally between the said top and bottom portions
**characterised in that**
each of the said drive mechanisms (101, 111) is mounted in the corresponding portion (10, 11) so as to pivot about a spindle, so as to be able easily to be at least partially extracted from the corresponding frame or hood (100, 110), in order to facilitate access to the track (105, 115) which it contains, for removal or respectively mounting thereof.

2. A drive device according to Claim 1, **characterised in that** each drive mechanism (101, 111) comprises a longitudinal frame (102, 112) provided at a first one of its ends with a drive spindle (121, 131) carrying a drive wheel (120, 130) and at the other of its ends with a return spindle carrying a return wheel (104, 114), the track passing over the drive wheel and the return wheel, as well as means (106, 116, 107, 117) of fixing the said longitudinal support in the corresponding portion.

3. A drive device according to Claim 2, **characterised in that** the means of fixing the longitudinal support (102, 112) in the corresponding portion consists of the drive spindle or the return spindle, the ends of which are fixed in housings in the corresponding frame or hood (100, 110), allowing a pivoting of the drive mechanism (101, 111) about the said spindle, as well as a device (107, 117) for locking the drive mechanism in its hood.

4. A drive device according to Claim 3, **characterised in that** the locking device comprises at least one pin (107, 117) able to lock the drive mechanism in the folded position in the frame or the corresponding hood.

5. A drive device according to Claim 4, **characterised in that** the locking mechanism also comprises a device (106) for putting the track under mechanical tension.

6. A device according to one of the preceding claims, **characterised in that** at least one of the drive mechanisms (101, 111) comprises a protective plate (118) on each of its longitudinal lateral faces.

7. A device according to Claim 6, **characterised in that** the protective plates (118) comprise, on their end close to the insertion orifice of the said slender element, an extension (119) able to prevent accidental insertion of a finger.

8. A device according to one of the preceding claims, **characterised in that** each track comprises an endless chain (105, 115) provided with drive pieces disposed successively on the said chain and each carrying a driving sole plate.

9. A device according to one of Claims 1 to 7, **characterised in that** each track comprises an endless belt.

## Patentansprüche

1. Antriebssystem (1) für ein langliniges Element (2) mit einem oberen Abschnitt (10), der eine erste Antriebseinrichtung (101) einer ersten Endlosraupe (105) umfasst, und einem unteren Abschnitt (11), der eine zweite Antriebseinrichtung (111) einer zweiten Endlosraupe (115) umfasst, wobei zwei einander gegenüberliegende geradlinige Abschnitte der Raupen gegen zwei entgegen gesetzte Seiten des langlinigen Elements gedrückt werden und dieses Element durch Verschiebung auslösen und die oberen (10) und unteren (11) Abschnitte jeweils mit einem Rahmen oder einem Deckel (100, 110) abgedeckt sind, der die entsprechende Antriebseinrichtung derart umschließt, dass in Arbeitsstellung des Antriebssystems keine ausreichende Öffnung zwischen den Rahmen oder Deckeln verbleibt, durch die ungewollt ein Finger zwischen die oberen und unteren Abschnitte gelangen kann, **dadurch gekennzeichnet, dass** die Antriebsmechanismen (101, 111) jeweils im entsprechenden Abschnitt (10, 11) um eine Achse derart schwenkbar gelagert sind, dass sie zumindest teilweise leicht aus dem entsprechenden Rahmen oder Deckel (100, 110) herausgezogen werden können, um den Zugriff auf die vom Rahmen oder Deckel umschlossene Raupe (105, 115) zum Zwecke ihrer Demontage bzw. Montage zu erleichtern.

2. Antriebssystem nach Anspruch 1, **dadurch gekennzeichnet, dass** jede Antriebseinrichtung (101, 111) ein langliniges Gestell (102, 112), das an seinem ersten Ende mit einer ein Antriebsrad (120, 130) tragenden Antriebsachse (121, 131) und an seinem anderen Ende mit einer ein Übertragungsrad (104, 114) tragenden Übertragungsachse versehen ist, wobei die Raupe oberhalb des Antriebsrads und des Übertragungsrads durchführt, sowie Befestigungsmittel (106, 116, 107, 117) des langlinigen Trägers im entsprechenden Abschnitt umfasst.

3. Antriebssystem nach Anspruch 2, **dadurch gekennzeichnet, dass** das Befestigungsmittel des langlinigen Trägers (102, 112) im entsprechenden Abschnitt aus der Antriebsachse und der Übertragungsachse, deren Enden in Aufnahmen des entsprechenden Rahmens oder Deckels (100, 110) befestigt werden, so dass ein Schwenken der Antriebseinrichtung (101, 111) um diese Achse ermöglicht wird, sowie aus einer Sperrvorrichtung (107, 117) der Antriebseinrichtung in ihrem Deckel gebildet wird.

4. Antriebssystem nach Anspruch 3, **dadurch gekennzeichnet, dass** die Sperrvorrichtung zumindest einen Stift (107, 117) umfasst, der geeignet ist, die Antriebseinrichtung in eingeklappter Position im entsprechenden Rahmen oder Deckel zu blockieren.

5. Antriebssystem nach Anspruch 4, **dadurch gekennzeichnet, dass** die Sperrvorrichtung darüber hinaus eine mechanische Spannvorrichtung (106) der Raupe umfasst.

6. Antriebssystem nach einem der vorstehenden Ansprüche, **dadurch gekennzeichnet, dass** zumindest eine der Antriebseinrichtungen (101, 111) eine Blechschutzplatte (118) an jeder ihrer länglichen Seitenflächen umfasst.

7. Antriebssystem nach Anspruch 6, **dadurch gekennzeichnet, dass** die Schutzbleche (118) an ihrem Ende nahe bei der Einführungsöffnung für das langlinige Element eine Ausweiterung (119) aufweisen, die geeignet ist, die ungewollte Einführung eines Fingers zu verhindern.

8. Antriebssystem nach einem der vorstehenden Ansprüche, **dadurch gekennzeichnet, dass** jede Raupe eine Endloskette (105, 115) umfasst, die mit nacheinander auf dieser Kette angeordneten und jeweils eine Antriebssohle tragenden Antriebsteilen versehen ist.

9. Antriebssystem nach einem der Ansprüche 1 bis 7, **dadurch gekennzeichnet, dass** jede Raupe einen Endlosriemen umfasst.
